# EUROPEAN PATENT APPLICATION

(11) **EP 1 912 209 A1**
(43) Date of publication of application: **16.04.2008**
(21) Application number: 07019713.2
(22) Date of filing: 09.10.2007
(51) Int. Cl.: G11B 7/0045, G11B 7/013, G11B 7/244, G11B 7/245, G11B 7/246

(54) **Optical recording medium, recording method of information on optical recording medium and reproducing method thereof**

(30) Priority: 10.10.2006 JP 2006276246
(71) Applicant: Funai Electric Co., Ltd., Daito-shi Osaka 574-0013 (JP)
(72) Inventor: Ito, Shinzaburo, Kyoto-shi Kyoto 615-8510 (JP); Ohkita, Hideo, Kyoto-shi Kyoto 615-8510 (JP); Benten, Hiroaki, Kyoto-shi Kyoto 615-8510 (JP); Nagashima, Kenji, Daito-shi Osaka 574-0013 (JP); Takeda, Toru, Daito-shi Osaka 574-0013 (JP)
(74) Representative: Beetz & Partner

(57) **Abstract**

A recording layer of an optical recording medium is made of a polymer film containing a polymer solid, such as polymethyl methacrylate, as a main ingredient. The polymer film contains a dye to absorb light having a specific wavelength band, and the optical recording medium exhibits anisotropy in at least one of light absorption intensity and emission intensity by irradiating the recording layer with a linearly polarized light having the specific wavelength band and an arbitrary polarization direction. It is preferable that the specific wavelength band is included in a wavelength region of 350 nm to 450 nm.

## Description

### BACKGROUND OF THE INVENTION

### Field of the Invention

The present invention relates to an optical recording medium, and particularly to an optical recording medium on which information can be recorded at high density. Besides, the present invention relates to a recording method of information on the optical recording medium and a reproducing method of information.

### Description of Related Art

An optical recording system has various merits, for example, recording and reproduction can be performed on an optical recording medium in a non-contact manner, and random access can be performed. Thus, the optical recording system becomes widespread in the industrial world and the general public.

In the optical recording system, there are both types of read-only and rewritable optical recording media, and an optical pickup apparatus for performing recording and reproduction on such optical recording media becomes widely and generally used. Besides, the optical recording medium has a very high recording density as compared with a general magnetic recording medium, and in order to further increase the recording density, a beam spot diameter of a laser used for recording and reproduction is decreased, and distances between adjacent tracks of the optical recording medium and between adjacent pits are shortened.

In a read-only DVD-ROM as a typical optical recording medium presently put to practical use, high density recording of 4.7 Gbyte for single-sided single-layer, 8.5 Gbyte for single-sided double-layer, 9.4 Gbyte for double-sided single-layer, and 17 Gbyte for double-sided double-layer can be performed on a disk of a diameter of 12 cm. In the writable and erasable DVD-RAM, high density recording of 4.7 Gbyte for single-sided single-layer, and 9.4 Gbyte for double-sided single-layer can be performed. As stated above, although the recording density of the optical recording medium is increasing year by year, since data is recorded on a recording surface of the optical recording medium, there is a physical limit in the recording density due to the restriction of the diffraction limit of light.

Thus, as a method of further increasing the recording density of the optical recording medium, a method is proposed in which multi-value data, not binary data, is recorded in one recording pit, and examples thereof are disclosed in JP-A-S64-17248 and JP-A-H04-38720. In the optical recording medium disclosed in JP-A-S64-17248, plural recording layers different from each other in Curie temperature are laminated on a substrate, and at least one of light irradiated to this recording medium and bias magnetic field applied at the time of recording is changed according to recording information, so that multi-value recording is performed. In the optical recording medium disclosed in JP-A-H04-38720, the inclination quantity of a recording pit is changed so that multi-value recording is performed.

However, in the optical recording medium disclosed in JP-A-S64-17248, the number of layers is limited, and it can not be expected to greatly increase the multi-value number. Besides, the increase of the film thickness due to the increase of the number of layers causes a problem of reduction of recording density in the plane direction due to thermal diffusion in the disk plane direction. In the optical recording medium disclosed in JP-A-H04-38720, at the time of reproduction, differences between reproduced optical patterns due to the inclination quantities of respective pits are detected by plural detectors. In this case, when the multi-value number is increased, the differences between the respective patterns become considerably small, and S/N is decreased, and therefore, it can not be expected to greatly increase the multi-value number.

Then, an optical recording medium disclosed in JP-A-H11-238251 includes a recording layer functioning as a 1/4 wavelength plate or a 1/2 wavelength plate, and performs the multi-value recording by using the rotation of the direction of the 1/4 wavelength plate or the 1/2 wavelength plate corresponding to the polarization direction of a linearly polarized light incident on the optical recording medium. According to this method, the optical recording medium on which high density recording can be performed is obtained.

Besides, it is very important for high quality reproduction to obtain a reproduction signal with high S/N. As an optical recording medium in which a reproduction signal with high S/N can be obtained, what is disclosed in JP-A-2001-325745 is known. The optical recording medium disclosed in JP-A-2001-325745 includes a light-emitting layer and a recording layer, the light-emitting layer is made of a light-emitting material to emit fluorescence by light excitation, and the recording layer is made of a material capable of changing one of a refractive index and an absorption coefficient with respect to the fluorescence from the light-emitting layer. Information is recorded as a change of the refractive index or the absorption coefficient in this recording layer.

At the time of reproduction, the recorded information is read based on the change in the light amount of the fluorescence from the light-emitting layer which emitted light by the excitation caused by the reproducing light. At this time, an optical pickup apparatus is constructed so that the reflected light of the reproducing light or the transmitted light and the fluorescence from the light-emitting layer can be separated almost 100% by a dichroic mirror. Thus, the reflected light of the reproducing light or the transmitted light, which becomes a cause of noise, can be effectively eliminated, and the reproduction signal with high S/N can be obtained.

However, in the optical recording medium disclosed in JP-A-H11-238251, when the irradiation amount (product of intensity and time) of the recording light is insufficient, the refractive index does not become stable, and there is a problem that information can not be stably recorded. Besides, as the wavelength of a light source, in the case where the wavelength of from blue to violet is selected in order to obtain high density recording, there is also a possibility that the high density recording can not be performed. Besides, in the optical recording medium disclosed in JP-A-2001-325745, since binary recording is performed, there is a problem that great improvement of recording density can not be expected.

### SUMMARY OF THE INVENTION

In view of the above problems, an object of the invention is to provide an optical recording medium on which information can be recorded at high density. Besides, another object of the invention is to provide an optical recording medium on which information can be recorded at high density and in which a reproduction signal with high S/N can be obtained. Further, another object of the invention is to provide a recording method of information on an optical recording medium, for recording information at high density. Further, another object of the invention is to provide a reproducing method of information of an optical recording medium on which information is recorded at high density.

In order to achieve the above objects, according to an aspect of the invention, an optical recording medium includes a recording layer for recording information, the recording layer contains a dye to absorb light having a specific wavelength band, and light absorption intensity exhibits polarization direction dependency by irradiating the recording layer with a preferably linearly polarized light having the specific wavelength band and an arbitrary polarization direction.

According to this, the optical recording medium can be realized in which the linearly polarized light is used as the recording light, and the polarization direction of the recording light can be recorded as multi-value information, and the optical recording medium on which high density recording can be performed can be provided. Besides, since the information can be recorded using a laser beam of a short wavelength (for example, 408 nm), the information can be recorded at high density.

Incidentally, in the invention, the dye means a material which has a large transition dipole moment and in which light absorption occurs intensely. This point applies to the invention in the following.

In order to achieve the above objects, according to another aspect of in the invention, an optical recording medium includes a recording layer for recording information, the recording layer contains a dye to absorb light having a specific wavelength band, and emission intensity exhibits polarization direction dependency by irradiating the recording layer with a preferably linearly polarized light having the specific wavelength band and an arbitrary polarization direction.

According to this, the optical recording medium can be realized in which the linearly polarized light is used as the recording light, and the polarization direction of the recording light can be recorded as multi-value information, and the optical recording medium on which high density recording can be performed can be provided. Besides, since the information can be recorded using a laser beam of a short wavelength (for example, 408 nm), the information can be recorded at high density. Further, the reproduction of the optical recording medium can be performed by detecting an emission light obtained in a case where a reproducing light is irradiated to the optical recording medium. In this case, since the reproducing light and the emission light are different from each other in wavelength, the reproducing light which becomes a cause of noise and the return light reflected by the optical recording medium can be separated from the emission light by using a separation element having wavelength selectivity. Accordingly, it is possible to provide the optical recording medium in which high S/N reproduction can be performed.

In the invention, in the optical recording medium of the above structure, the dye is preferably uniformly dispersed in a polymer film constituting the recording layer.

According to this, the optical recording medium on which information can be stably recorded can be provided.

In the invention, in the optical recording medium of the above structure, the dye is preferably an organic dye.

According to this, it is easy to obtain the dye exhibiting large absorption with respect to the light within the short wavelength band, and further, the dye is easily dispersed in the polymer film constituting the recording layer.

In the invention, in the optical recording medium of the above structure, the specific wavelength band is preferably in a wavelength range of from 350 nm to 450 nm.

According to this, since the spot size of the light condensed on the optical recording medium can be decreased, it becomes possible to obtain a higher-density optical recording medium.

In order to achieve the objects, according to another aspect of the invention, a recording method of information on an optical recording medium which includes a recording layer containing a dye to absorb light having a specific wavelength band, and in which light absorption intensity exhibits polarization direction dependency by irradiating the recording layer with a preferably linearly polarized light having the specific wavelength band and an arbitrary polarization direction, wherein a preferably linearly polarized light whose polarization direction is preferably selected according to information to be recorded is irradiated as a recording light to the recording layer, and the polarization direction is preferably recorded as multi-value information.

According to this, since the multi-value information can be recorded, the information can be recorded at high density.

In order to achieve the objects, according to another aspect of the invention, a recording method of information on an optical recording medium which includes a recording layer containing a dye to absorb light having a specific wavelength band, and in which emission intensity exhibits polarization direction dependency by irradiating the recording layer with a preferably linearly polarized light having the specific wavelength band and an arbitrary polarization direction, wherein a preferably linearly polarized light whose polarization direction is preferably selected according to information to be recorded is irradiated as a recording light to the recording layer, and the polarization direction is recorded as multi-value information.

According to this, since the multi-value information can be recorded, the information can be recorded at high density.

In the invention, in the recording method of information on the optical recording medium, plural recording lights having different polarization directions may be overlapped and irradiated on the same position of the recording layer.

According to this, as compared with a case where only a single polarization direction is recorded at the same position, the amount of information can be further increased, and therefore, the information can be recorded at higher density.

A reproducing method of information of an optical recording medium which includes a recording layer containing a dye to absorb light having a specific wavelength band, and in which a preferably linearly polarized light whose polarization direction is preferably selected according to information to be recorded is irradiated as a recording light to the recording layer of the optical recording medium exhibiting polarization direction dependency in light absorption intensity by irradiating the recording layer with a preferably linearly polarized light having the specific wavelength band and an arbitrary polarization direction, and the polarization direction is recorded as multi-value information, wherein a reproducing light having the specific wavelength band is irradiated to the optical recording medium, and the multi-value information is preferably reproduced by detecting a light amount of a transmitted light transmitted through the recording layer or a reflected light reflected after being transmitted through the recording layer in each of plural specified polarization directions.

According to this, the multi-value recorded information can be reproduced.

A reproducing method of information of an optical recording medium which includes a recording layer containing a dye to absorb light having a specific wavelength band, and in which a preferably linearly polarized light whose polarization direction is preferably selected according to information to be recorded is irradiated as a recording light to the recording layer of the optical recording medium exhibiting polarization direction dependency in emission intensity by irradiating the recording layer with a preferably linearly polarized light having the specific wavelength band and an arbitrary polarization direction, and the polarization direction is recorded as multi-value information, wherein a reproducing light having the specific wavelength band is irradiated to the optical recording medium, and the multi-value information is preferably reproduced by detecting an amount of light emission of the dye in each of plural specified polarization directions.

According to this, the multi-value recorded information can be reproduced. Besides, since the information is reproduced by detecting the emission light, by using that the reproducing light incident on the optical recording medium and the emission light are different from each other in wavelength, it becomes possible to separate the reproducing light, which becomes a cause of noise, the return light reflected by the optical recording medium, and the like. Accordingly, high S/N reproduction becomes possible.

As stated above, according to the invention, the optical recording medium can be provided in which information can be recorded using a short wavelength, the recording can be performed at high density, and the reproduction signal with high S/N can be obtained. Besides, it is possible to provide the recording method of information on the optical recording medium, for recording information at high density. Further, it is possible to provide the reproducing method of information of the optical recording medium in which information is recorded at high density.

### BRIEF DESCRIPTION OF THE DRAWINGS

Fig. 1 is a cross-sectional view showing a general layer structure of an optical recording medium according to an embodiment of the invention.
Fig. 2 is an explanatory view showing a general structure of an optical pickup apparatus according to an embodiment of the invention.
Fig. 3 is a view showing an absorption spectrum of DY7.
Fig. 4 is a view showing an absorption spectrum of DPVA and a fluorescence spectrum.
Fig. 5 is a view showing an absorption spectrum of C153 and a fluorescence spectrum.
Fig. 6 is a view showing a relation between the polarization direction of an irradiated light and absorption intensity after irradiation of a recording light with respect to an optical recording medium containing DY7.
Fig. 7 is a view showing a vector distribution of the light amount of a reflected light from an optical recording medium in a case where a circularly polarized light is irradiated after irradiation of a recording light with respect to an optical recording medium containing DY7.
Fig. 8 is a view showing a relation between the polarization direction of an irradiated light and absorption intensity after irradiation of a recording light with respect to an optical recording medium containing DPVA.
Fig. 9 is a view showing a relation between the polarization direction of an irradiated light and absorption intensity after irradiation of a recording light with respect to an optical recording medium containing C153.
Fig. 10A is an explanatory view for explaining a case where a polarization direction is doubly recorded on an optical recording medium containing DPVA and is a view showing a vector distribution of light absorption intensity in the optical recording medium in a case where recording of a polarization direction has not been performed at all.
Fig. 10B is an explanatory view for explaining a case where a polarization direction is doubly recorded on an optical recording medium containing DPVA and is a view showing a vector distribution of light absorption intensity in the optical recording medium in a case where a linearly polarized light whose polarization direction is 90 degrees has been irradiated.
Fig. 10C is an explanatory view for explaining a case where a polarization direction is doubly recorded on an optical recording medium containing DPVA and is a view showing a vector distribution of light absorption intensity in the optical recording medium in a case where a linearly polarized light whose polarization direction is 0 degree has been irradiated.
Fig. 10D is an explanatory view for explaining a case where a polarization direction is doubly recorded on an optical recording medium containing DPVA and is a view showing a vector distribution of light absorption intensity in the optical recording medium in a case where a linearly polarized light whose polarization direction is 0 degree and a linearly polarized light whose polarization direction is 90 degrees have been sequentially irradiated.
Fig. 11 is a view showing a relation between the polarization direction of an irradiated light and fluorescence intensity after a recording light is irradiated with respect to an optical recording medium containing DPVA.
Fig. 12 is a view showing a vector distribution of the light amount of an emission light from an optical recording medium in a case where a circularly polarized light is irradiated after a recording light is irradiated with respect to an optical recording medium containing DPVA.
Fig. 13 is a view showing a relation between the polarization direction of an irradiated light and fluorescence intensity after a recording light is irradiated with respect to an optical recording medium containing C153.
Fig. 14 is a graph showing a relation between fluorescence anisotropy and concentration in DPVA.
Fig. 15 is a graph showing a relation between fluorescence anisotropy and concentration in C153.
Fig. 16 is a plan view showing a diffraction plane of a polarization hologram of an embodiment of the invention.

### DETAILED DESCRIPTION OF THE PREFERRED EMBODIMENTS

Embodiments of the invention will be described with reference to the drawings. Incidentally, the embodiments described here are merely examples, and the invention is not limited to the structure described here.

In the invention, there are roughly two kinds of optical recording media. The two kinds of optical recording media are equal to each other in that recording of multi-value information is performed based on a difference in the polarization direction of a recording light which is a linearly polarized light, however, they are different from each other in that at the time of reproduction of recorded information, the information is detected by different methods. Accordingly, the two kinds of optical recording media are divided into a first embodiment and a second embodiment and their description will be made.

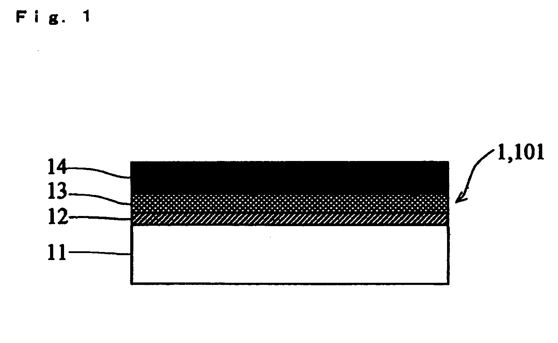

(First Embodiment) Fig. 1 is a sectional view showing a rough structure of an optical recording medium 1 according to a first embodiment. The optical recording medium 1 includes a reflecting layer 12, a recording layer 13 and a protecting layer 14 sequentially laminated on a substrate 11.

The substrate 11 is a member for supporting the reflecting layer 12 and the recording layer 13 and is made of, for example, glass or resin. The reflecting layer 12 is a layer for reflecting a reproducing light at the time of reproduction. Incidentally, in this embodiment, although the structure is made to include the reflecting layer 12, the invention is not necessarily limited to this structure, and in the case of a structure in which the reproducing light is made to pass through and recorded information is detected, the structure may not include the reflecting layer 12. The protecting layer 14 is for preventing data loss due to a flaw or dust, and is provided to protect the recording layer 13. As a material forming the protecting layer 14, for example, transparent resin such as polycarbonate is used.

The recording layer 13 is a layer for recording the polarization direction of a recording light (linearly polarized light), and is made of a polymer film containing, as its main ingredient, a polymeric solid such as polymethyl methacrylate, polycarbonate, or polyvinyl alcohol. Incidentally, the recording layer 13 is not limited to the polymer film, and may be made of another material.

Although the film thickness of the recording layer 13 is not particularly limited, it is preferable that the thickness is 1 µm or less in view of the thickness of the optical recording medium 1. Besides, the lower limit of the film thickness of the recording layer 13 is preferably in a range in which the object of recording of information can be achieved and the formation is not difficult, and is preferably 50 nm or more.

A dye is dispersed in the recording layer 13 so that the polarization direction of the recording light of the linearly polarized light can be recorded. As described before, the dye is a material which has a large transition dipole moment and in which light absorption occurs intensely. As the dye dispersed in the recording layer 13, there is selected such a dye that the dye absorbs light having a specific wavelength band, and when the dye is contained, in the case where a linearly polarized light having the specific wavelength band and an arbitrary polarization direction is irradiated to the recording layer 13, the optical recording medium exhibits anisotropy with respect to the light absorption intensity (that is, polarization direction dependency is exhibited with respect to the light absorption intensity). When such a dye is dispersed in the recording layer 13, the recording of information can be made multi-value recording by the selection of the polarization direction of the recording light. Incidentally, the details of the principle based on which the multi-value recording is enabled will be described later.

Incidentally, in this embodiment, since its object is to provide the optical recording medium on which recording can be performed at high density, the dye is selected which has large light absorption in a 408 nm band of a wavelength used in a short wavelength light source of a current optical pickup. By this, the multi-value recording is realized using the light source by which high density recording can be realized, and the recording capacity of information can be increased.

Incidentally, as an index of indicating large light absorption at the wavelength of 408 nm, it is preferable that the molar extinction coefficient of the dye at the wavelength of 408 nm is 1.0 × 10⁴ dm³mol⁻¹cm⁻¹ or more.

Besides, in this embodiment, although the dye having large light absorption at the wavelength of 408 nm is used, the invention is not necessarily limited to this wavelength, and in the case where high density recording is taken into consideration, any wavelength may be adopted as long as the wavelength is in the range of 350 nm to 450 nm. The above range is adopted since in the case where a laser of a wavelength shorter than 350 nm is irradiated to the optical recording medium, light absorption occurs in a portion other than the recording layer 13, which is disadvantageous, and a structure in which light of a wavelength longer than 450 nm is irradiated is insufficient in improvement of information density.

The dye as described above exhibits large light absorption at the wavelength of 408 nm, and when the dye is contained, in the case where the linearly polarized light having the wavelength of 408 nm and an arbitrary polarization direction is irradiated to the recording layer 13, the optical recording medium exhibits the anisotropy with respect to the absorption intensity, and although such dye may be an inorganic dye, especially there are many such organic dyes. For example, such dye can be found from organic dyes such as azo dyes, anthracene dyes, coumarin dyes, cyanine dyes, acridine dyes, and stilbene dyes.

In the following, as examples, the optical recording medium 1 in which DY7 (Disperse Yellow 7, compound name 2-Methyl-4-[4-(phenylazo)phenylazo]phenol or 4-[4-(Phenylazo)phenylazo]-o-cresol) of the azo dye is dispersed in the recording layer 13, the optical recording medium 1 in which DPVA (compound name 9,10-bis(diphenylvinylenyl)-anthracene) of the anthracene dye is dispersed in the recording layer 13, and the optical recording medium 1 in which C153 (Coumarin 153, compound name 8-Trifluoromethyl-2,3,5,6-tetrahydro-1H, 4H-11-oxa-3a-aza-benzo[de]anthracen-10-one) of the coumarin dye is dispersed in the recording layer 13 are used, and the mechanism of recording and reproduction of the optical recording medium 1 of the embodiment will be described. Incidentally, the structural formulae of DY7, DPVA and C153 are shown in formulae (1), (2) and (3) in sequence.

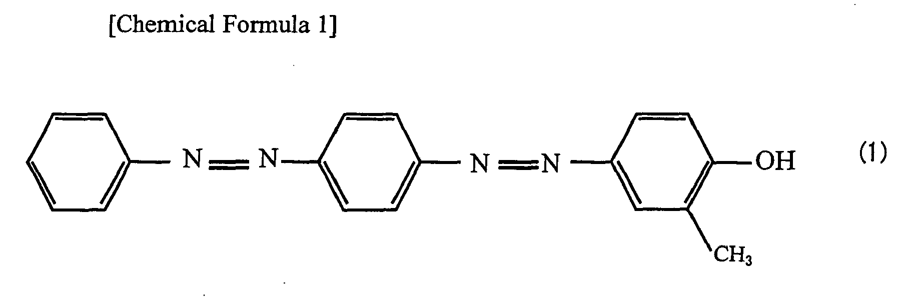

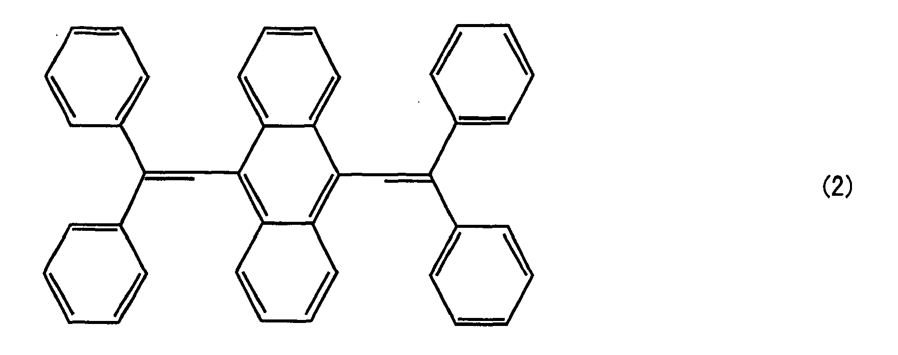

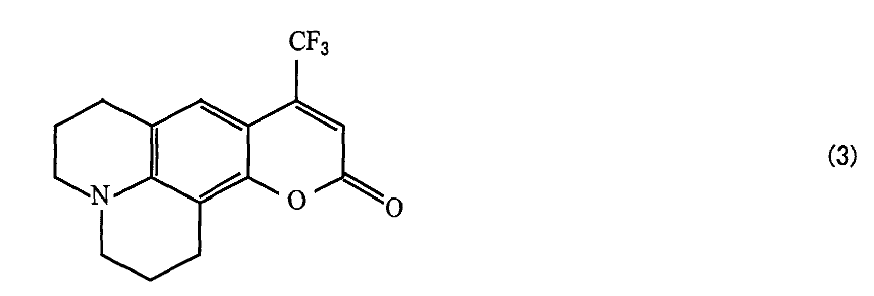

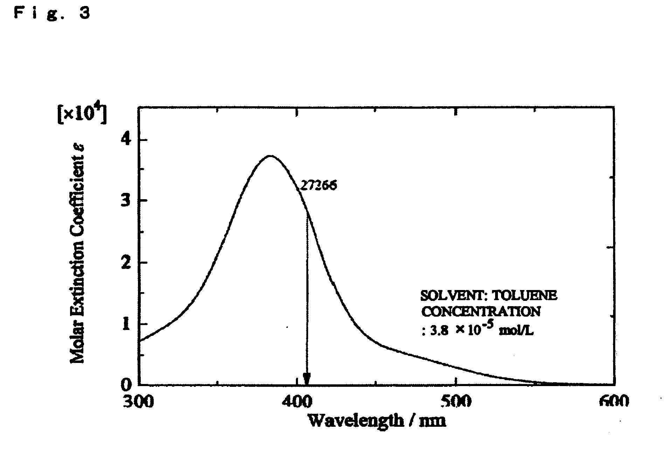

Incidentally, as shown in Fig. 3, Fig. 4 and Fig. 5, the molar extinction coefficients of DY7, DPVA and C153 at a wavelength of 408 nm are 2.7 × 10⁴ dm³mol⁻¹cm⁻¹, 1.4 × 10⁴ dm³mol⁻¹cm⁻¹, and 1.8 × 10⁴ dm³mol⁻¹cm⁻¹, respectively, and it is understood that they exhibit large light absorption at the wavelength of 408 nm (having large transition dipole moment). In Fig. 3, Fig. 4 and Fig. 5, the horizontal axis indicates the wavelength (unit is nm), and the vertical axis indicates the molar extinction coefficient (unit is dm³mol⁻¹cm⁻¹). Besides, with respect to all the dyes, toluene is used as the solvent.

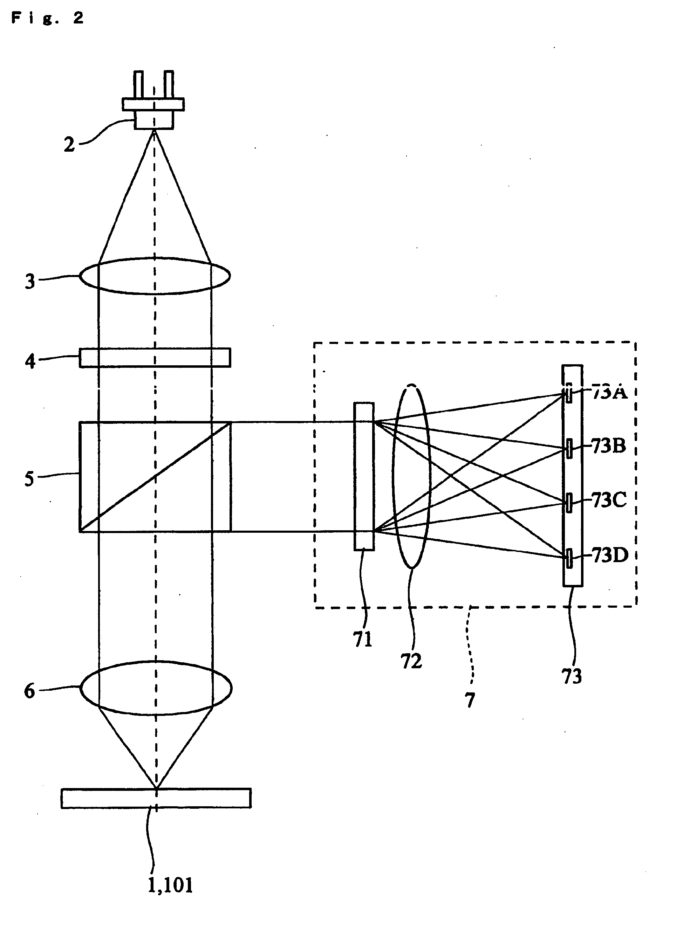

Hereinafter, although the mechanism of recording and reproduction of the optical recording medium 1 will be described, before that, a structural example of an optical pickup apparatus used for the recording and reproduction will be described. Fig. 2 is an explanatory view showing a rough structure of an optical pickup apparatus of the embodiment. The optical pickup apparatus of the embodiment includes a laser light source 2, a collimating lens 3, a polarization control means 4, a separation element 5, an objective lens 6, and a detection unit 7.

The laser light source 2 is a light source to emit a laser light of a linearly polarized light (in this embodiment, a semiconductor laser to emit a laser light of a wavelength of 408 nm band is used), and the collimating lens 3 converts the light emitted from the laser light source 2 into a parallel light. The polarization control means 4 functions as spatial light modulation means for converting a polarization direction in accordance with recorded multi-value information at the time of information recording, and functions as circularly polarized light generation means for converting a linearly polarized light from the collimating lens 3 into a circularly polarized light at the time of information reproduction.

Incidentally, although the details will be described later, the polarization control means 4 may be constructed of one element (for example, a polarization rotation element) functioning as both the spatial light modulation means and the circularly polarized light generation means, or may have a structure that separate elements constituting the spatial light modulation means and the circularly polarized light generation means are switched and inserted into an optical path according to the recording and reproduction of information. In the case where the polarization means 4 is constructed of one element functioning as both the spatial light modulation means and the circularly polarized light generation means, as compared with the structure in which the separate elements constituting the spatial light modulation means and the circularly polarized light generation means are switched and inserted into the optical path according to the recording and reproduction of information, the optical pickup apparatus can be miniaturized.

Here, the one polarization rotation element functioning as both the spatial light modulation means and the circularly polarized light generation means is, for example, a magneto-optic spatial light modulator. The magneto-optic spatial light modulator can change the polarization direction of the linearly polarized light from the light source according to an applied voltage, and can also generate the circularly polarized light by high speed modulation. As another example of the polarization rotation element as stated above, a PEM element can be named. Besides, a structure may be made such that for example, a liquid crystal display is used as the spatial light modulation means, a 1/4 wavelength plate is used as the circularly polarized light generation means, and these are switched and inserted into the optical path according to the recording and reproduction of information.

The separation element 5 allows the light from the polarization control means 4 to pass through and guides it to the optical recording medium 1, while reflects the reflected light from the optical recording medium 1 toward the direction of the detection unit 7. As an example of the separation element 5 as stated above, a half mirror, a prism or the like can be named.

The objective lens 6 condenses the light from the separation element 5 on the optical recording medium 1. The detection unit 7 receives the reflected light (reflected light of the reproducing light) from the optical recording medium 1 obtained through the separation element 5, measures a difference in the light amount of the received light according to the polarization direction, and detects the polarization direction recorded on the optical recording medium 1. Incidentally, the details of the detection unit 7 will be described later.

A description will be given to a case where information is recorded on the optical recording medium 1 by the optical pickup apparatus as stated above. The laser light of the linearly polarized light emitted from the laser light source 2 is made parallel by the collimating lens 3. Here, the polarization control means 4 at the time of recording of information functions as the spatial light modulation means, and the polarization direction of the linearly polarized light incident from the collimating lens 3 is changed by that according to multi-value information to be recorded. The light is transmitted through the separation element 5 and is condensed on the optical recording medium 1 by the objective lens 6. By this, the polarization direction is recorded on the optical recording medium 1.

Next, a description will be given to the operation of the optical pickup apparatus in the case where the information of the optical recording medium 1 is reproduced. The laser light emitted from the laser light source 2 is made parallel by the collimating lens 3. Here, the polarization control means 4 at the time of reproduction of information functions as the circularly polarized light generation means, and by this, the linearly polarized light incident from the collimating lens 3 is changed into the circularly polarized light.

The light is transmitted through the separation element 5 and is condensed on the optical recording medium 1 by the objective lens 6. Thereafter, the reproducing light is reflected by the optical recording medium 1, and comes out from the optical recording medium 1. This reflected light is reflected by the separation element 5 and is sent to the detection unit 7. The detection unit 7 measures a difference in the light amount of the received light according to the polarization direction and detects the polarization direction recorded on the optical recording medium 1.

Incidentally, in the optical pickup apparatus described above, although the structure is such that the circularly polarized light is irradiated to the optical recording medium 1 when information is reproduced, the invention is not necessarily limited to this structure, and a structure may be made such that for example, a linearly polarized light is irradiated to the optical recording medium 1 while its direction is rotated.

The mechanism of recording and reproduction of information of the optical recording medium 1 will be specifically described, while an explanation will be made to the behavior of DY7, DPVA and C153 in the case where the optical pickup apparatus is used to record information on the optical recording medium 1 containing DY7, DPVA or C153 as the dye in the recording layer 13.

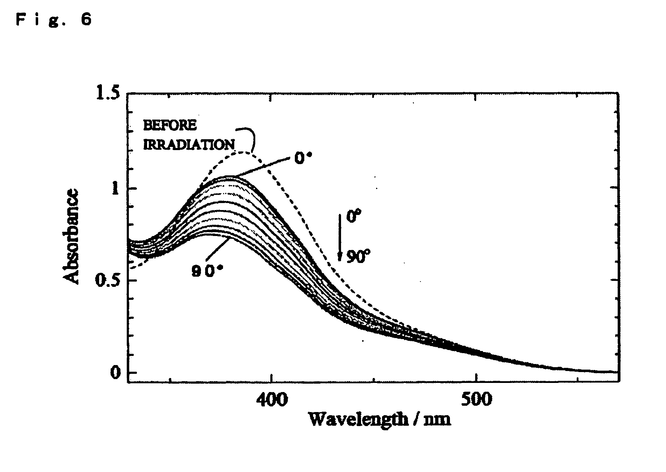

(Dye: DY7) First, the optical recording medium 1 in which DY7 is contained in the recording layer 13 will be described. Fig. 6 is a view showing a relation between the polarization direction of irradiated light and absorption intensity after a linearly polarized light (wavelength of 408 nm) whose polarization direction is made 90 degrees by the polarization control means 4 is irradiated to the recording layer as a recording light. In the drawing, the horizontal axis indicates the wavelength (unit is nm) and the vertical axis indicates the absorbance (log₁₀(I₀/I): I₀ is the amount of incident light, I is the amount of transmitted light), and the polarization direction is changed at intervals of 15 degrees in the range of from 0 degree to 90 degrees. Incidentally, a spectrum indicated by a broken line is an absorption spectrum obtained in the case where a linearly polarized light having an arbitrary polarization is irradiated before the linearly polarized light as the recording light is irradiated. Besides, the recording layer 13 is formed by doping polymethyl methacrylate with DY7, the concentration of DY7 with respect to polymethyl methacrylate is 1.0 × 10⁻¹ M, and the thickness of the recording layer 13 is 2.4 µm.

From FIG. 6, before the irradiation of the linearly polarized light, there is no difference in the absorption intensity due to the difference of the polarization direction, and the common absorption spectrum is obtained with respect to all polarization directions. However, by the irradiation of the linearly polarized light, as the polarization direction increases from 0 degree to 90 degrees, the light absorption intensity is decreased, and the anisotropy occurs in the light absorption intensity. It appears that this is because when the recording light of the linearly polarized light having the polarization direction of 90 degrees is irradiated to the recording layer 13 from the laser light source 2, there occurs disappearance (this appears to be caused by isomerization) of the transition dipole moments of DY7 molecules having orientations corresponding to the polarization direction of 90 degrees, and the spatial distribution of the transition dipole moment is changed.

From this, the polarization direction can be recorded as multi-value information on the optical recording medium 1 by selection of the polarization direction of the linearly polarized light from the laser light source 2, which is irradiated as the recording light. Then, by this, the multi-value recording can be realized.

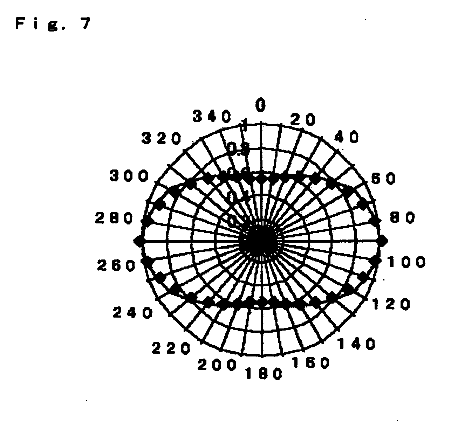

Next, a description will be given to a case where the recorded polarization direction is detected by using the reflected light (reflected light of the reproducing light) from the optical recording medium 1. When the reproducing light which has been made the circularly polarized light by the polarization control means 4 is irradiated to the optical recording medium 1, the light amount of the reflected light from the optical recording medium 1 varies according to the polarization direction because of the anisotropy of the absorption intensity of the optical recording medium 1. For example, in the case where the polarization direction of 90 degrees is recorded, the vector distribution with respect to the light amount of the reflected light from the optical recording medium 1 is as shown in Fig. 7.

Incidentally, in Fig. 7, outside numerals of the circular coordinates indicate polarization directions. The polar coordinate form is adopted in which a distance from the center point of the circular coordinates of the graph in each of the polarization directions indicates the amount of the light having the polarization direction component. Also here, the recording layer 13 is formed by doping polymethyl methacrylate with DY7, the concentration of DY7 with respect to polymethyl methacrylate is 1.0 × 10⁻¹ M, and the thickness of the recording layer 13 is 2.4 µm. The light from the laser light source 2 has a wavelength of 408 nm and an irradiation intensity of 830 mWcm⁻².

As shown in Fig. 7, the recorded polarization direction (here, 90 degrees) and the other polarization direction are different from each other in the amount of reflected light. Thus, in the detection unit 7 to detect the reflected light from the optical recording medium 1, the light amount of the reflected light from the optical recording medium 1 is measured in each of plural specified polarization directions, and when the ratio of the obtained light amounts is obtained, the polarization direction recorded on the optical recording medium 1 can be detected. That is, by this principle, the reproduction of multi-value recorded information becomes possible. Incidentally, the details of the reproduction will be described later.

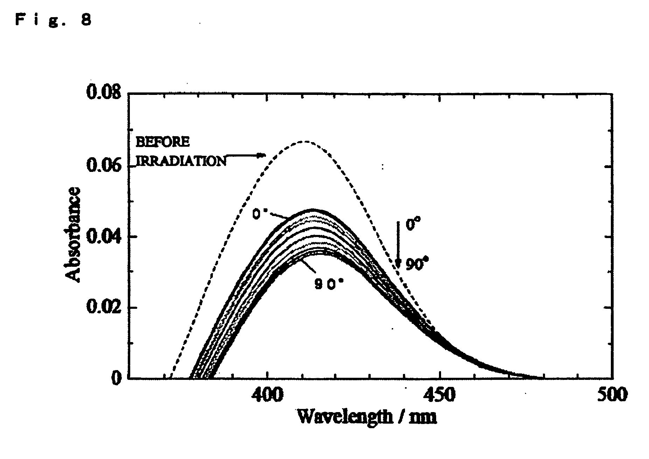

(Dye: DPVA) Next, a description will be given to a case where DPVA is contained in the recording layer 13. Fig. 8 is a view showing a relation between the polarization direction of an irradiated light and absorption intensity after a linearly polarized light whose polarization direction is made 90 degrees by the polarization control means 4 has been irradiated to the recording layer as a recording light. Here, the polarization direction is changed at intervals of 15 degrees in the range of from 0 degree to 90 degrees. In the figure, the horizontal axis and the vertical axis are the same as those of Fig. 6. Incidentally, a spectrum indicated by a broken line is an absorption spectrum obtained in the case where a linearly polarized light having an arbitrary polarization direction is irradiated before the linearly polarized light as the recording light is irradiated. Besides, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm.

From Fig. 8, similarly to the case where DY7 is contained as the dye, before the irradiation of the linearly polarized light, there is no difference in the absorption intensity due to the difference of the polarization direction, and a common spectrum is obtained for all polarization directions. However, by the irradiation of the linearly polarized light, as the polarization direction is increased from 0 degree to 90 degrees, the light absorption intensity is decreased, and it is understood that anisotropy occurs in the light absorption intensity. It appears that this is because when the recording light of the linearly polarized light having the polarization direction of 90 degrees is irradiated to the recording layer 13 from the laser light source 2, there occurs disappearance (here, although this appears to be caused by, for example, decomposition of a molecule, oxidization or the like, the details are not clear) of the transition dipole moments of DPVA molecules having orientations corresponding to the polarization direction of 90 degrees, and the spatial distribution of the transition dipole moment is changed.

From this, also in the case where DPVA is contained as the dye, similarly to the case where DY7 is contained as the dye, by the selection of the polarization direction of the linearly polarized light from the laser light source 2, which is irradiated as the recording light, the polarization direction can be recorded as multi-value information on the optical recording medium 1. Then, by this, multi-value recording can be realized.

A method of detecting the recorded polarization direction by using the reflected light (reflected light of the reproducing light) from the optical recording medium 1 is performed similarly to the case where DY7 is contained as the dye.

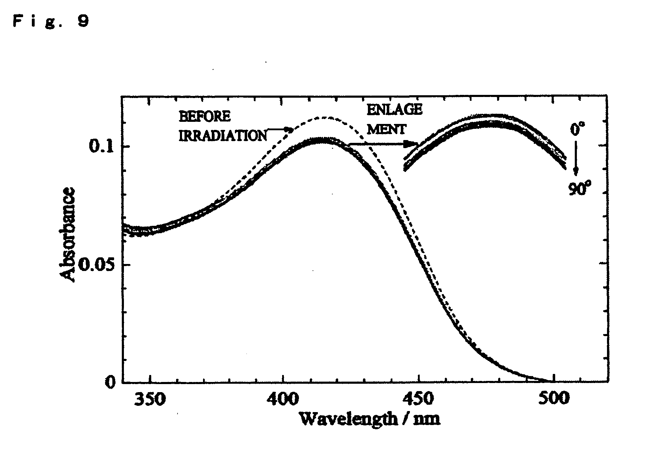

(Dye: C153) Next, a description will be given to the case where C153 is contained in the recording layer 13. Fig. 9 is a view showing a relation between the polarization direction of an irradiated light and absorption intensity after the linearly polarized light whose polarization direction is made 90 degrees by the polarization control means 4 is irradiated as the recording light to the recording layer 13. Here, the polarization direction is changed at intervals of 15 degrees in the range of from 0 degree to 90 degrees. In the figure, the horizontal axis and the vertical axis are the same as those of Fig. 6. Incidentally, a spectrum indicated by a broken line is an absorption spectrum obtained in the case where a linearly polarized light having an arbitrary polarization direction is irradiated before the linearly polarized light as the recording light is irradiated. Besides, the recording layer 13 is formed by doping polymethyl methacrylate with C153, the concentration of C153 with respect to polymethyl methacrylate is 1.0 × 10⁻³M, and the film thickness is 30 µm.

From Fig. 9, similarly to the case where DY7 or DPVA is contained as the dye, before the irradiation of the linearly polarized light, there is no difference in the absorption intensity due to the difference of the polarization direction, and a common absorption spectrum is obtained for all polarization directions. However, by the irradiation of the linearly polarized light, as the polarization direction is increased from 0 degree to 90 degrees, the light absorption intensity is decreased, and it is understood that anisotropy occurs in the light absorption intensity. It appears that this is because when the recording light of the linearly polarized light having the polarization direction of 90 degrees is irradiated to the recording layer 13 from the laser light source 2, there occurs disappearance (here, although this appears to be caused by, for example, decomposition of a molecule, oxidization or the like, the details are not clear) of the transition dipole moments of C 153 molecules having orientations corresponding to the polarization direction of 90 degrees, and the spatial distribution of the transition dipole moment is changed.

From this, also with respect to the case where C153 is contained as the dye, similarly to the case where DY7 or DPVA is contained as the dye, the polarization direction can be recorded as multi-value information on the optical recording medium 1 by the selection of the polarization direction of the linearly polarized light from the laser light source 2, which is irradiated as the recording light. By this, multi-value recording can be realized.

A method of detecting the recorded polarization direction by using the reflected light (reflected light of the reproducing light) from the optical recording medium 1 is performed similarly to the case where DY7 is contained as the dye.

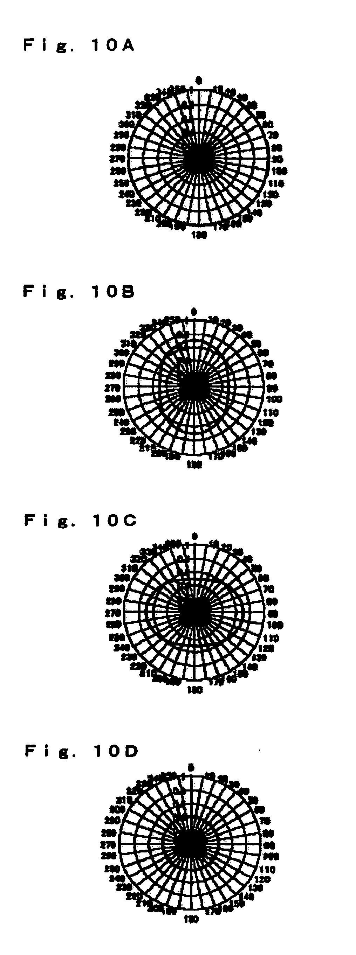

In the above, although the description has been given to the method in which with respect to the optical recording medium 1 containing DY7, DPVA or C153 as the dye in the recording layer 13, the linearly polarized light having one kind of polarization direction is irradiated to one place and the recording of the polarization direction is performed, it is also possible to perform multiple recording of polarization directions by overlappingly irradiating one place with plural linearly polarized lights having different polarization directions. With respect to this point, a case where DPVA is contained as the dye will be described with reference to Fig. 10A to Fig. 10D while double recording is used as an example.

Incidentally, in Fig. 10A to Fig. 10D, outside numerals of the circular coordinates indicate polarization directions. The polar coordinate form is adopted in which a distance from the center point of the circular coordinates of the graph in each of the polarization directions indicates the absorption intensity of the light having the polarization direction component by the optical recording medium 1.

Fig. 10A shows a vector distribution of light absorption intensity of the optical recording medium 1 in which recording of the polarization direction has not been performed at all. Since the recording of the polarization direction has not been performed at all, there is no difference in the light absorption intensity due to the difference in the polarization direction of an irradiated light, and the absorption intensity becomes 1.

Fig. 10B shows a vector distribution of light absorption intensity of the optical recording medium 1 in the case where a linearly polarized light whose wavelength is 408 nm and whose polarization direction is made 90 degrees by the polarization control means 4 is irradiated from the laser light source 2 to the optical recording medium 1 in which recording of the polarization direction has not been performed at all. In this case, the elliptical vector distribution is obtained in which the absorption intensity of the light having the polarization direction of 90 degrees, by which the polarization recording has been performed, is minimum and the absorption intensity in the polarization direction of 0 degree is maximum.

Fig. 10C shows a vector distribution of light absorption intensity of the optical recording medium 1 in the case where a linearly polarized light whose wavelength is 408 nm and whose polarization direction is made 0 degree by the polarization control means 4 is irradiated from the laser light source 2 to the optical recording medium 1 in which recording of the polarization direction has not been performed at all. In this case, the elliptical vector distribution is obtained in which the absorption intensity of the light having the polarization direction of 0 degree, by which the polarization recording has been performed, is minimum and the absorption intensity in the polarization direction of 90 degrees is maximum.

Fig. 10D shows a vector distribution of light absorption intensity of the optical recording medium 1 in the case where a linearly polarized light whose wavelength is 408 nm and whose polarization direction is made 90 degrees by the polarization control means 4 is irradiated from the laser light source 2 to the optical recording medium 1 in which recording of the polarization direction has not been performed at all, and then, a linearly polarized light whose wavelength is 408 nm and whose polarization direction is made 0 degree by the polarization control means 4 is further irradiated from the laser light source 2 to the optical recording medium. In this case, although the difference of the light absorption intensity due to the difference of the polarization direction becomes small, the absorption intensity becomes a small value which is about 0.4 as compared with that before the irradiation.

As described above, the vector distribution of the light absorption intensity of the optical recording medium 1 is clearly different among all of the non-recorded state (Fig. 10A), the state (Fig. 10B) in which only the polarization direction of 90 degrees is recorded, the state (Fig. 10C) in which only the polarization direction of 0 degree is recorded, and the state (Fig. 10D) in which double recording of the polarization direction of 90 degrees and the polarization direction of 0 degree is performed. Accordingly, also in the case where the polarization direction is doubly recorded, its detection becomes possible, and the usability of the double recording in the optical recording medium 1 of the invention is admitted.

Incidentally, in the results shown in Fig. 10A to Fig. 10D, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm.

Besides, in the first embodiment, although the structure in which the recording layer 13 contains DY7, DPVA or C153 has been described, as described before, another dye may be used as long as the dye exhibits large light absorption at the wavelength of 408 nm, and when the dye is contained, in the case where the linearly polarized light having the wavelength of 408 nm and an arbitrary polarization direction is irradiated to the recording layer 13, the optical recording medium exhibits anisotropy in the light absorption intensity.

Besides, although the concentration of the dye contained in the recording layer 13 (the concentration with respect to a main ingredient constituting the recording layer 13, for example, the concentration with respect to polymethyl methacrylate) is not particularly limited, since the anisotropy of the light absorption intensity is generated by using the dye, it is preferable that the concentration is as high as possible. As stated above, in view of the fact that the thickness of the recording layer 13 included in the optical recording medium 1 is preferably 1 µm or less, it is preferable that the concentration of the dye contained in the recording layer 13 is 0.1 M or more. The upper limit of the concentration is not particularly limited as long as the dye can be uniformly dispersed in the polymer film.

(Second embodiment) Next, an optical recording medium 101 of a second embodiment will be described. Incidentally, with respect to portions overlapping with those of the first embodiment, their description will be omitted in the case where there is particularly no need.

The basic structure of the optical recording medium 101 is the same as the optical recording medium 1 of the first embodiment shown in Fig. 1, and a reflecting layer 12, a recording layer 13 and a protecting layer 14 are sequentially laminated on a substrate 11.

The optical recording medium 101 is different from the optical recording medium 1 of the first embodiment in a dye contained in the recording layer 13. That is, as the dye contained in the recording layer 13 of the optical recording medium 101, there is selected such a dye that the dye absorbs light having a specific wavelength band, and when the dye is contained, in the case where a linearly polarized light having the specific wavelength band and an arbitrary polarization direction is irradiated to the recording layer 13, the optical recording medium exhibits anisotropy in emission intensity (that is, polarization direction dependency is exhibited in the emission intensity). When such a dye is dispersed in the recording layer 13, recording of information can be made multi-value recording by selection of the polarization direction of a recording light. Incidentally, the details of the principle based on which the multi-value recording is enabled will be described later.

Incidentally, similarly to the case of the first embodiment, from the viewpoint of the optical recording medium on which recording can be made at high density, in this embodiment, the optical recording medium contains the dye exhibiting large light absorption at the wavelength of 408 nm band. However, as described before, the invention is not limited to the case of the dye exhibiting large light absorption with respect to the light having the wavelength of 408 nm band. Besides, from the viewpoint of high density recording, it is preferable that the dye having a large transition dipole moment in the range of 350 nm to 450 nm is contained in the optical recording medium.

Besides, as an index of indicating large light absorption at the wavelength of 408 nm, it is preferable that the molar extinction coefficient of the dye at the wavelength of 408 nm is 1.0 × 10⁴ dm³mol⁻¹cm⁻¹ or more.

The dye as described above exhibits large light absorption at the wavelength of 408 nm, and when the dye is contained, in the case where the linearly polarized light having the specific wavelength band and an arbitrary polarization direction is irradiated to the recording layer 13, the optical recording medium exhibits the anisotropy in the emission intensity, and although such dye may be an inorganic dye, especially there are many such organic dyes. For example, such dye can be found from organic dyes such as azo dyes, anthracene dyes, coumarin dyes, cyanine dyes, acridine dyes, and stilbene dyes.

In the following, as examples, the optical recording medium 101 in which DPVA (compound name 9,10-bis(diphenylvinylenyl)-anthracene) of the anthracene dye is dispersed in the recording layer 13, and the optical recording medium 101 in which C153 (Coumarin 153, compound name 8-Trifluoromethyl-2,3,5,6-tetrahydro-1H, 4H-11-oxa-3a-aza-benzo[de]anthracen-10-one) of the coumarin dye is dispersed in the recording layer 13 are used, and the mechanism of recording and reproduction of the optical recording medium 101 of the embodiment will be described.

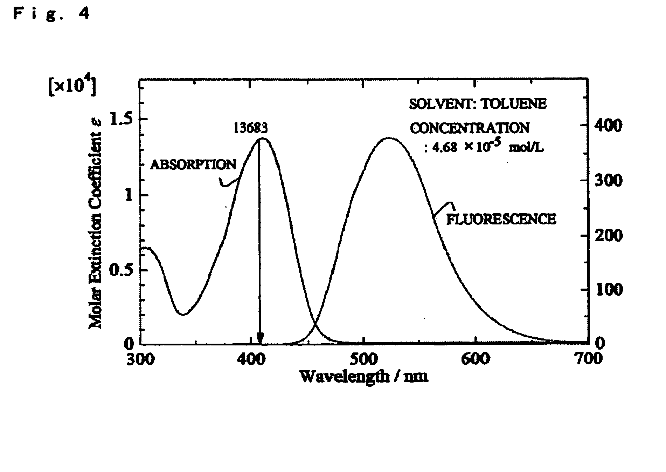

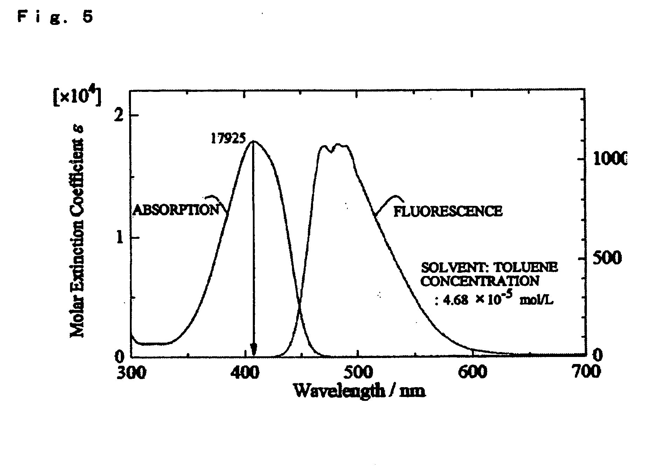

Incidentally, as shown in Fig. 4 and Fig. 5, the molar extinction coefficients of DPVA and C 153 at the wavelength of 408 nm are 1.4 × 10⁴ dm³mol⁻¹cm⁻¹ and 1.8 × 10⁴ dm³mol⁻¹cm⁻¹, respectively, and it is understood that they exhibit large light absorptions at the wavelength of 408 nm (having large transition dipole moments). A fluorescence spectrum is observed in both the materials, and it is understood that they are fluorescence molecules. In Fig. 4 and Fig. 5, the horizontal axis indicates the wavelength (unit is nm), the vertical axis at the left side of the figure indicates the molar extinction coefficient (unit is dm³mol⁻¹cm⁻¹), and the vertical axis at the right side indicates the fluorescence intensity.

Hereinafter, the mechanism of recording and reproduction of the optical recording medium 101 will be described. Incidentally, since a structure of an optical pickup apparatus used for the recording and reproduction of the optical recording medium 101 is the same as that of the optical pickup apparatus in the case of the first embodiment shown in Fig. 2, only different points will be described here, and the other description will be omitted.

A point different from the case of the first embodiment is the structure of the separation element 5. The separation element 5 of this embodiment transmits light having a specific band including the wavelength of light from the polarization control means 4, that is, the wavelength of the light source and guides it to the optical recording medium 101, and when a reproducing light is irradiated, the separation element reflects light having a wavelength in a specified band including a wavelength of emission light (for example, fluorescence light) emitted from the optical recording medium 101. As an example of the separation element 5 as stated above, a dichroic mirror including a dielectric multi-layer film, a prism or the like can be named. Incidentally, the details of the detection unit 7 included in the optical pickup apparatus will be described later.

Since a method of recording information on the optical recording medium 101 by using the optical pickup apparatus as stated above is the same as that of the case of the first embodiment, its description will be omitted here. However, since the operation of the optical pickup apparatus in the case where information of the optical recording medium 101 is reproduced is different, the operation will be described below with reference to Fig. 2.

The laser light emitted from the laser light source 2 is made parallel by the collimating lens 3. Here, the polarization control means 4 at the time of reproduction of information functions as the circularly polarized light generation means, and by this, the linearly polarized light incident from the collimating lens 3 is changed into the circularly polarized light. Incidentally, the structure may be made such that the conversion into the circularly polarized light is not performed, and the linearly polarized light is irradiated to the optical recording medium 101 while its direction is rotated.

The circularly polarized light is transmitted through the separation element 5 and is condensed on the optical recording medium 101 by the objective lens 6. Thereafter, the reproducing light is absorbed by the optical recording medium 101, and emission light is emitted thereby from the optical recording medium 101. Here, the emission spectrum shifts to the longer wavelength side than the absorption spectrum. Thus, only the emission light is reflected by the separation element 5 having wavelength selectivity, and is sent to the detection unit 7. The detection unit 7 measures a difference in the light amounts of the received light due to polarization directions, and detects the polarization direction recorded on the optical recording medium 101.

The mechanism of recording and reproduction of information of the optical recording medium 101 will be described, while an explanation will be given to the behavior of DPVA, C153 in the case where the optical pickup apparatus is used to record information on the optical recording medium 101 in which the recording layer 13 contains DPVA, C153.

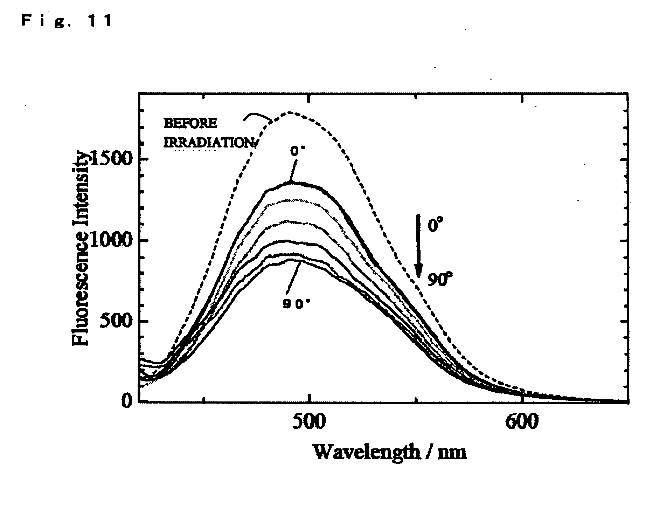

(Dye: DPVA) First, a description will be given to the optical recording medium 101 in which DPVA is contained in the recording layer 13. Fig. 11 is a view showing a relation between the polarization direction of irradiated light and emission intensity (fluorescence intensity in this embodiment) after the linearly polarized light (wavelength of 408 nm) whose polarization direction is made 90 degrees by the polarization control means 4 is irradiated as the recording light to the recording layer 13. Here, the polarization direction is changed at intervals of 15 degrees in the range from 0 degree to 90 degrees. In the figure, the horizontal axis indicates the wavelength (unit is nm) and the vertical axis indicates the fluorescence intensity (relative value). Incidentally, a spectrum indicated by a broken line is a fluorescence spectrum obtained in the case where a linearly polarized light having an arbitrary polarization direction is irradiated before the irradiation of the linearly polarized light as the recording light. The recording layer 13 is formed by doping polymethyl methacrylate with DPVA, the concentration of DPVA with respect to polymethyl methacrylate is 1.0 × 10⁻³ M, and the thickness of the recording layer 13 is 30 µm.

From Fig. 11, before the irradiation of the linearly polarized light, there is no difference in the fluorescence intensity due to the difference in the polarization direction, and a common fluorescence spectrum is obtained for all polarization directions. However, by the irradiation of the linearly polarized light, as the polarization direction is increased from 0 degree to 90 degrees, the fluorescence intensity is decreased, and anisotropy occurs in the fluorescence intensity. It appears that this is because when the recording light of the linearly polarized light having the polarization direction of 90 degrees is irradiated to the recording layer 13 from the laser light source 2, there occurs disappearance (here, although this appears to be caused from, for example, decomposition of molecules, oxidization or the like, the details are not clear) of the transition dipole moments of DPVA molecules having orientations corresponding to the polarization direction of 90 degrees, and the spatial distribution of the transition dipole moment is changed.

From this, the polarization direction can be recorded as multi-value information on the optical recording medium 101 by selection of the polarization direction of the linearly polarized light from the laser light source 2, which is irradiated as the recording light. Then, by this, multi-value recording can be realized.

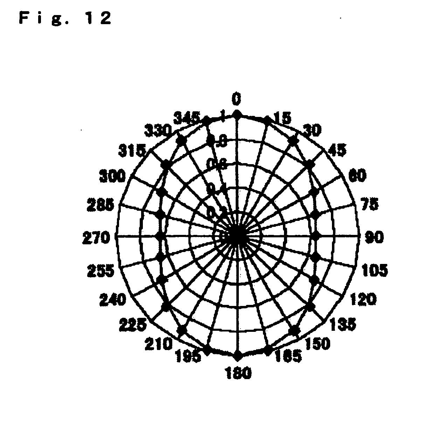

Next, a description will be given to the case where the recorded polarization direction is detected by using the fluorescence emitted from the optical recording medium 101 by irradiation of a reproducing light to the optical recording medium 101. When the reproducing light which has been made the circularly polarized light by the polarization control means 4 is irradiated to the optical recording medium 101, the light amount of the fluorescence emitted from the optical recording medium 101 varies according to the polarization direction because of the anisotropy of the fluorescence intensity of the optical recording medium 101. For example, in the case where the polarization direction of 90 degrees is recorded, the vector distribution of the light amount of the fluorescence emitted from the optical recording medium 101 is as shown in Fig. 12.

Incidentally, in Fig. 12, outside numerals of the circular coordinates indicate polarization directions. The polar coordinate form is adopted in which a distance from the center point of the circular coordinates of the graph in each of the polarization directions indicates the amount of the light having the polarization direction component. Also here, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm. Incidentally, the light from the laser light source 2 has a wavelength of 408 nm and an irradiation intensity of 830 mWcm⁻².

As shown in Fig. 12, the recorded polarization direction (here, 90 degrees) and the other polarization direction are different from each other in the amount of fluorescence. Thus, in the detection unit 7 to detect the emission light (fluorescence in this embodiment) from the optical recording medium 101, the light amount of the fluorescence emitted from the optical recording medium 101 is measured in each of plural specified polarization directions, and when the ratio of the obtained light amounts is obtained, the polarization direction recorded on the optical recording medium 101 can be detected. That is, by this principle, reproduction of multi-value recorded information becomes possible. Incidentally, the details of reproduction will be described later.

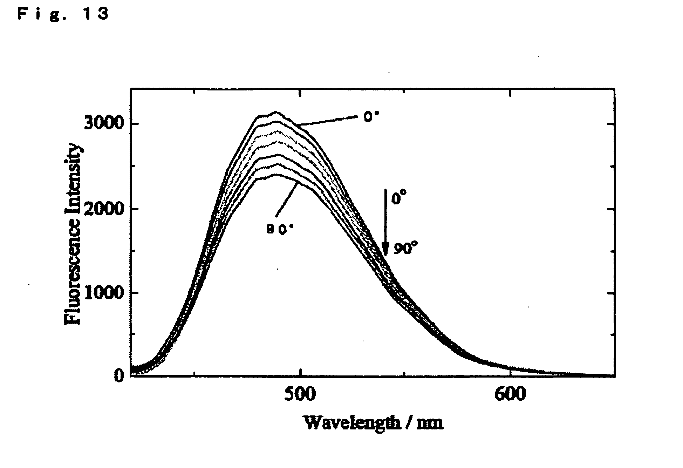

(Dye: C153) Fig. 13 is a view showing a relation between the polarization direction of irradiated light and emission intensity (fluorescence intensity in this embodiment) after a linearly polarized light (wavelength of 408 nm) whose polarization direction is made 90 degrees by the polarization control means 4 is irradiated as a recording light to the recording layer 13. Here, the polarization direction is changed at intervals of 15 degrees in the range from 0 degree to 90 degrees. In the figure, the horizontal axis indicates the wavelength (unit is nm) and the vertical axis indicates the fluorescence intensity (relative value). Incidentally, a spectrum indicated by a broken line is a fluorescence spectrum obtained in the case where a linearly polarized light having an arbitrary polarization direction is irradiated before the irradiation of the linearly polarized light as the recording light. Also here, the recording layer 13 is formed by doping polymethyl methacrylate with C153, the concentration of C 153 with respect to polymethyl methacrylate is 1.0 × 10⁻³ M, and the thickness of the recording layer 13 is 30 µm.

From Fig. 13, similarly to the case where DPVA is contained as the dye, before the irradiation of the linearly polarized light, there is no difference in the fluorescence intensity due to the difference in the polarization direction, and a common fluorescence spectrum is obtained for all polarization directions. However, by the irradiation of the linearly polarized light, as the polarization direction is increased from 0 degree to 90 degrees, the fluorescence intensity is decreased, and anisotropy occurs in the fluorescence intensity. It appears that this is because when the recording light of the linearly polarized light having the polarization direction of 90 degrees is irradiated to the recording layer 13 from the laser light source 2, there occurs disappearance (here, although this appears to be caused from, for example, decomposition of molecules, oxidization or the like, the details are not clear) of the transition dipole moments of C153 molecules having orientations corresponding to the polarization direction of 90 degrees, and the spatial distribution of the transition dipole moment is changed.

From this, the polarization direction can be recorded as multi-value information on the optical recording medium 101 by selection of the polarization direction of the linearly polarized light from the laser light source 2, which is irradiated as the recording light. Then, by this, multi-value recording can be realized. Incidentally, similarly to the case where DPVA is contained as the dye, the recorded polarization direction can be detected.

In the above, although the description has been given to the method in which the linearly polarized light having one kind of polarization direction is irradiated to one place and recording of information is performed, similarly to the first embodiment, it is also possible to perform multiple recording of polarization directions by overlappingly irradiating one place with plural linearly polarized lights having different polarization directions.

Besides, in the second embodiment, although the structure in which the recording layer 13 contains DPVA or C153 has been described, another dye may be used as long as the dye exhibits large light absorption at the wavelength of 408 nm, and when the dye is contained, in the case where the linearly polarized light having the wavelength of 408 nm and an arbitrary polarization direction is irradiated to the recording layer 13, the optical recording medium exhibits anisotropy in the emission intensity.

Besides, although the concentration of the dye contained in the recording layer 13 (concentration with respect to a main ingredient constituting the recording layer 13, for example, concentration with respect to polymethyl methacrylate) is not particularly limited, when the concentration of the dye becomes high, excitation energy transfers from a molecule to another molecule, that is, the so-called fluorescence energy transfer occurs, and therefore, it is preferable that the concentration of the dye is not made excessively high.

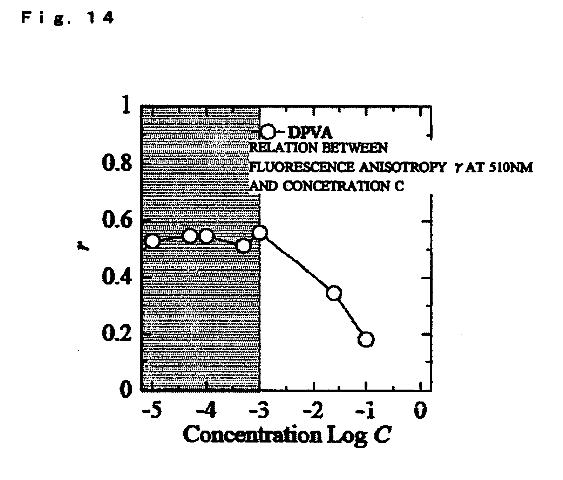

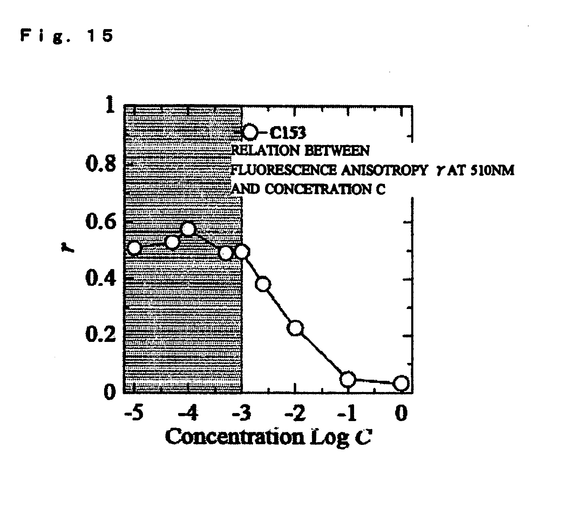

In this point, with respect to DPVA and C153, evaluation results of concentration dependency of fluorescence anisotropy are shown in Fig. 14 and Fig. 15. The figures are graphs each showing a relation between fluorescence anisotropy y at a wavelength of 510 nm and dye concentration C. In view of the results, the dye concentration is preferably 10⁻² M or less, and is more preferably 10⁻³ M or less. Incidentally, the lower limit of the concentration is determined by the detectable level on the detection side, and is preferably 10⁻⁶ M or more.

### (Details of the detection unit 7 of the optical pickup apparatus)

Although the principle of the recording and reproduction has been described with respect to the optical recording media 1 and 101 of the first and the second embodiments, the details of the detection unit 7 to reproduce the optical recording media 1 and 101 will be described.

The detection unit 7 receives the reflected light of the reproducing light from the optical recording medium 1 or the emission light emitted from the optical recording medium 101, and has only to be capable of detecting the polarization direction recorded on the optical recording medium 1, 101 from the difference in the light amount of the received light due to the polarization direction. Accordingly, the structure may be naturally made such that a light detector is included, and the light amount in each polarization direction is measured by rotating the light detector.

Hereinafter, a method of using a polarization hologram 71 shown in Fig. 2 will be described. In Fig. 2, the detection unit 7 includes the polarization hologram 71, a detection lens 72, and a light amount measurement device 73.

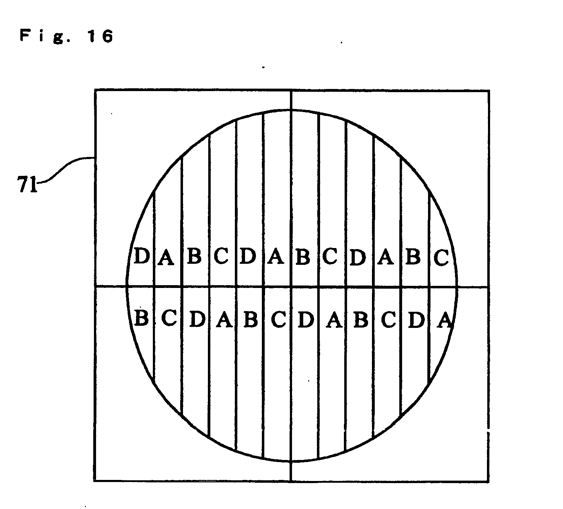

The polarization hologram 71 causes a light having a specified polarization direction among incident lights to diffract, and extracts it in a separate state. Here, Fig. 16 is a plan view in which the polarization hologram 71 is seen from the diffraction plane side. The polarization hologram 71 includes plural stripe-shaped diffraction regions disposed in parallel to each other. In more detail, the respective diffraction regions of the polarization hologram 71 include four kinds of diffraction regions A to D. These four kinds of diffraction regions A to D correspond to respective regions formed by dividing the whole diffraction plane (circular region) of the polarization hologram 71 into upper and lower two stages, and further dividing this equally in the lateral direction.

Incidentally, the structure of the polarization hologram 71 is not limited to the structure of this embodiment. For example, the structure of the upper and lower two stages may not be adopted.

Besides, the detection lens 72 condenses lights diffracted in the respective diffraction regions of the polarization hologram 71 to the specified positions of the light amount measurement device 73. The light amount measurement device 73 includes condensing sections 73A to 73D to receive the lights diffracted by the respective diffraction regions A to D of the polarization hologram 71 through the detection lens 72. That is, the respective diffraction regions A to D of the polarization hologram 71 are in one-to-one correspondence with the respective condensing sections 73A to 73D of the light amount measurement device 73, and for example, the light diffracted in the diffraction region A is received by the condensing section 73A.

Here, for example, the light condensed on the condensing section 73A corresponds to the polarized light of the polarization direction of 0 degree, the light condensed on the condensing section 73B corresponds to the polarized light of the polarization direction of 45 degrees, the light condensed on the condensing section 73C corresponds to the polarized light of the polarization direction of 90 degrees, and the light condensed on the condensing section 73D corresponds to the polarized light of the polarization direction of 135 degrees. According to such structure, when the light amounts of the lights condensed on the condensing sections 73A, 73B, 73C and 73D of the light amount measurement device 73 are respectively measured, the light amounts of the components of the polarization direction of 0 degree, the polarization direction of 45 degrees, the polarization direction of 90 degrees, and the polarization direction of 135 degrees of the reflected light or the emission light from the optical recording medium 1 can be known.

Then, the recorded polarization direction can be detected from the measured light amounts of the components of the polarization direction of 0 degree, the polarization direction of 45 degrees, the polarization direction of 90 degrees, and the polarization direction of 135 degrees of the reflected light of the reproducing light from the optical recording medium 1 or the emission light emitted from the optical recording medium 101.

Hereinafter, first, a description will be given, by use of an example, to a detection method of a polarization direction recorded on the optical recording medium 1 in the case where a reproducing light (circularly polarized light) is irradiated to the optical recording medium 1 (corresponding to the optical recording medium of the first embodiment) in which anisotropy in light absorption intensity occurs according to the polarization direction of a recording light of a linearly polarized light, and the reflected light of the reproducing light from the optical recording medium 1 is sent to the detection unit 7 through the separation element 5.

In this example, the polarization direction patterns used for recording are four patterns (four-value modulation) of 0 degree, 45 degrees, 90 degrees, and 135 degrees similarly to the polarization directions in which the light amount is measured by the light amount measurement device 73, and the detection in the case where the polarization direction of 90 degrees among them is recorded will be considered. Incidentally, the recording layer 13 is formed by doping polymethyl methacrylate with DY7, the concentration of DY7 with respect to polymethyl methacrylate is 1.0 × 10⁻¹M, and the thickness of the recording layer 13 is 2.4 µm.

At this time, the reproducing light (circularly polarized light) is irradiated to the optical recording medium 1, and when the reflected light of the reproducing light from the reflecting layer 12 is sent to the detection unit 7 through the separation unit 5, from Fig. 7, the ratio of the light amounts measured at the condensing sections 73A, 73B, 73C and 73D is almost 0.55:0.75:1:0.75. Thus, it is detected that the recorded polarization direction is 90 degrees corresponding to the condensing section 73C at which the light amount is largest.

In this example, the reproducing light (circularly polarized light) is irradiated to the optical recording medium 1 of the first embodiment, and in the case where the reflected light of the reproducing light from the optical recording medium 1 is sent to the detection unit 7 through the separation element 5, the number of the diffraction region patterns (four of A to D) of the polarization hologram 71 is equal to the number of the polarization direction patterns (four patterns of 0 degree, 45 degrees, 90 degrees, and 135 degrees) used for recording. The polarization direction of light condensed on each condensing section is made the same as the polarization direction of light used for recording. In this case, in the reflected light of the reproducing light from the optical recording medium 1, the light amount of the condensing section corresponding to the recorded polarization direction becomes maximum. Accordingly, by using this, the recorded polarization direction can be detected.

Besides, also in the case where the number of polarization direction patterns used for recording is different from the number of diffraction region patterns of the polarization hologram 71, the polarization direction recorded on the optical recording medium 1 can be detected. In this case, various calculations are performed from the light amounts of lights condensed on the respective condensing sections, and with respect to the reflected light from the optical recording medium 1, the polarization direction in which the light amount is largest is detected. Thus, it is necessary to pay attention to the fact that as the number of polarization direction patterns used for recording becomes large, the S/N is decreased.

Next, a description will be given, by use of an example, to a detection method of a polarization direction recorded on the optical recording medium 101 in the case where a reproducing light (circularly polarized light) is irradiated to the optical recording medium 101 (corresponding to the optical recording medium of the second embodiment) in which anisotropy in emission intensity occurs according to the polarization direction of the recording light of the linearly polarized light, and the emission light (corresponding to the fluorescence in the second embodiment) emitted from the optical recording medium 101 by the reproducing light is sent to the detection unit 7 through the separation element 5.

In this example, the polarization direction patterns used for recording are four patterns (four-value modulation) of 0 degree, 45 degrees, 90 degrees, and 135 degrees similarly to the polarization directions in which the light amount is measured by the light amount measurement device 73, and the detection in the case where the polarization direction of 90 degrees among them is recorded will be considered. Incidentally, the recording layer 13 is formed by doping polymethyl methacrylate with DPVA, the concentration of DPVA with respect to polymethyl methacrylate is 1.0 × 10⁻³M, and the thickness of the recording layer 13 is 30 µm.

At this time, the reproducing light (circularly polarized light) is irradiated to the optical recording medium 1, and when the fluorescence emitted from the optical recording medium 101 by the reproducing light is sent to the detection unit 7 through the separation unit 5, from Fig. 12, the ratio of the light amounts measured at the respective condensing sections 73A, 73B, 73C and 73D is almost 1:0.8:0.65:0.8. Thus, it is detected that the recorded polarization direction is 90 degrees corresponding to the condensing section 73C at which the light amount is smallest.

In this example, the reproducing light (circularly polarized light) is irradiated to the optical recording medium 101 of the second embodiment, and in the case where the emission light emitted from the optical recording medium 101 by the reproducing light is sent to the detection unit 7 through the separation element 5, the number of the diffraction region patterns (four of A to D) of the polarization hologram 71 is equal to the number of the polarization direction patterns (four patterns of 0 degree, 45 degrees, 90 degrees, and 135 degrees) used for recording. The polarization direction of light condensed on each condensing section is made the same as the polarization direction of light used for recording. In this case, in the emission light emitted from the optical recording medium 101, the light amount of the condensing section corresponding to the recorded polarization direction becomes minimum. Accordingly, by using this, the recorded polarization direction can be detected.

Besides, also in the case where the number of polarization direction patterns used for recording is different from the number of diffraction region patterns of the polarization hologram 71, the polarization direction recorded on the optical recording medium 101 can be detected. In this case, various calculations are performed from the light amounts of lights condensed on the respective condensing sections, and with respect to the emission light from the optical recording medium 1, the polarization direction in which the light amount is smallest is detected. Thus, it is necessary to pay attention to the fact that as the number of polarization direction patterns used for recording becomes large, the S/N is decreased.

When the structure of the detection unit 7 is made as described above, plural specified lights having the different polarization direction respectively are simultaneously extracted in the separated state out of the light from the optical recording medium 1, 101, the light amount measurement on each of the plural specified lights is simultaneously performed, and the polarization direction recorded on the optical recording medium 1, 101 can be detected by using the light amount ratio. Thus, as compared with a method in which plural specified lights having a different polarization direction respectively are sequentially extracted out of the light from the optical recording medium 1, 101 by rotating a light detector, and the light amounts of the extracted lights are respectively measured, high speed reproduction becomes possible. Besides, since the light amount ratio is used, the fluctuation in the light mount of the reproducing light does not have an influence.

Besides, since each of the diffraction region patterns A, B, C and D of the polarization hologram 71 is provided at plural positions, the influence of a scratch or the like of a disk can be suppressed. That is, high S/N reproduction becomes possible.

Incidentally, the invention is not limited to the above embodiments, and various modifications can be made in the scope not departing from the gist of the invention. Particularly, since this embodiment has an object to achieve high density recording, the short wavelength side (wavelength region of blue to violet) is a target, however, it is of course that the invention can also be widely applied to an optical recording medium, for example, using a laser light of a red region.

Since recording can be performed on the optical recording medium of the invention at high density, it is effective as a medium for recording a large amount of information. Besides, the recording method and the reproducing method of the invention are very effective in the field in which a high density optical recording medium is required.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An optical recording medium comprising a recording layer for recording information, wherein
the recording layer contains a dye to absorb light having a specific wavelength band, and
at least one of light absorption intensity and emission intensity exhibits polarization direction dependency by irradiating the recording layer with a linearly polarized light having the specific wavelength band and an arbitrary polarization direction.

2. The optical recording medium according to claim 1, wherein the dye is uniformly dispersed in a polymer film constituting the recording layer.

3. The optical recording medium according to claim 1 or 2, wherein the dye is an organic dye.

4. The optical recording medium according to any one of claims 1 to 3, wherein the specific wavelength band is included in a wavelength region of from 350 nm to 450 nm.

5. A recording method of information on an optical recording medium which includes a recording layer containing a dye to absorb light having a specific wavelength band, and in which at least one of light absorption intensity and emission intensity exhibits polarization direction dependency by irradiating the recording layer with a linearly polarized light having the specific wavelength band and an arbitrary polarization direction, wherein
a linearly polarized light whose polarization direction is selected according to information to be recorded is irradiated as a recording light to the recording layer, and the polarization direction is recorded as multi-value information.

6. The recording method of information on the optical recording medium according to claim 5, wherein plural recording lights having different polarization directions are overlappingly irradiated to a same position of the recording layer.

7. A reproducing method of information of an optical recording medium which includes a recording layer containing a dye to absorb light having a specific wavelength band, and in which a linearly polarized light whose polarization direction is selected according to information to be recorded is irradiated as a recording light to the recording layer of the optical recording medium exhibiting polarization direction dependency in at least one of light absorption intensity and emission intensity by irradiating the recording layer with a linearly polarized light having the specific wavelength band and an arbitrary polarization direction, and the polarization direction is recorded as multi-value information, comprising:
a step of irradiating the optical recording medium with a reproducing light having the specific wavelength band;
a step of detecting a light amount of a transmitted light transmitted through the recording layer or a reflected light reflected after being transmitted through the recording layer in each of plural specified polarization directions, or detecting a light amount of emission of the dye in each of plural specified polarization directions; and
a step of reproducing the multi-value information based on the detected information.
